(19) Europäisches Patentamt
European Patent Office
Office européen des brevets

(11) EP 4 300 378 A1

(12) EUROPEAN PATENT APPLICATION

(43) Date of publication:
03.01.2024 Bulletin 2024/01

(21) Application number: 22305926.2

(22) Date of filing: 27.06.2022

(51) International Patent Classification (IPC):
$G06N\ 10/40$ (2022.01)     $G06N\ 10/60$ (2022.01)

(52) Cooperative Patent Classification (CPC):
G06N 10/40; G06N 10/60

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Pasqal
91300 Massy (FR)

(72) Inventors:
• Dalyac, Constantin
  75014 Paris (FR)
• Henriet, Loïc
  44000 Nantes (FR)

(74) Representative: Slingsby Partners LLP
1 Kingsway
London WC2B 6AN (GB)

(54) **METHODS AND SYSTEMS TO FIND AN APPROXIMATE SOLUTION TO A MAXIMUM INDEPENDENT SET PROBLEM OF A GRAPH**

(57)     According to a first aspect, the present disclosure relates to a method to find an approximate solution to a maximum independent set problem of a graph, the method comprising: rearrange said input graph (12) onto a 3D orthogonal grid; determining, in the rearranged graph (13), for each pair of main nodes (202, 204) that are connected by a main edge (214), an ancillary path arranged along grid edges, using a pathfinding algorithm; generating an augmented 3D graph (14) by adding, in each ancillary path of the rearranged graph (13), an even number of ancillary nodes (221 - 224); providing a 3D array of neutral atoms comprising main atoms and ancillary atoms arranged to reflect the augmented 3D graph; applying a light shift pulse to the ancillary atoms in order to introduce at least one predetermined detuning of the resonance frequency of the ancillary atoms; applying a driving light pulse to all main atoms and all ancillary atoms to drive the 3D array of neutral atoms towards a predetermined final state; detecting the excited main atoms in the predetermined final state in order to obtain an independent set of the input graph.

FIG.4C

**Description**

TECHNICAL FIELD OF THE INVENTION

The present description relates to methods to find an approximate solution to a maximum independent set problem of a graph and systems implementing such methods.

BACKGROUND OF THE INVENTION

A maximum independent set (MIS) problem is a graph optimization problem that has several applications for example in portfolio diversification in finance or in broadcast systems optimization (for example for wifi or cellular networks) where data can be represented as a graph.

Such a graph, also referred to as input graph in the present description, generally comprises a plurality of nodes and a plurality of edges connecting said nodes. A MIS problem consists in finding the maximum, or one of the maximum independent sets in said input graph, wherein an independent set is a set of nodes comprised in said plurality of nodes, wherein any node of the independent set is not directly connected by an edge to any other node of the independent set. Two nodes are said to be directly connected if such nodes are connected by a single edge.

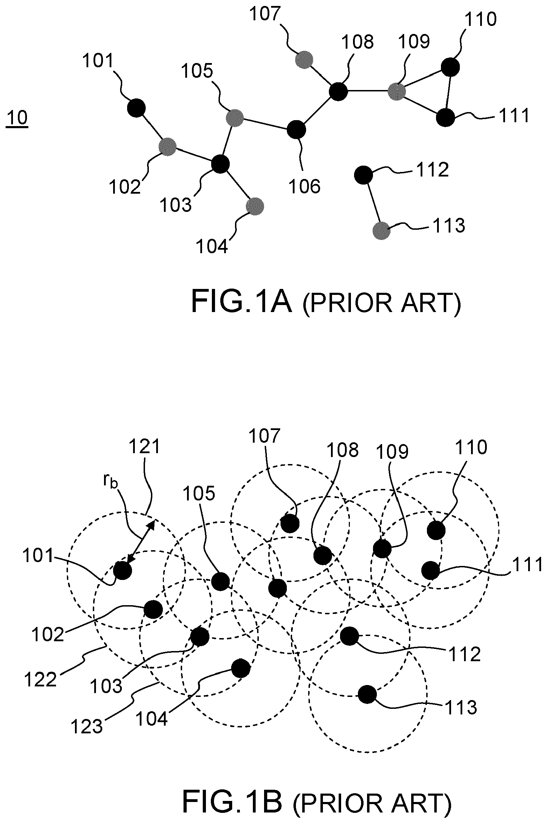

As an example, FIG. 1A illustrates an input graph 10 comprises 13 nodes (101 - 113). Among such nodes, the set comprising nodes 102, 104, 105, 107, 109, 113 is a MIS of the input graph 10.

MIS problems are considered to be NP-complete and their computational complexities make it impractical to find exact solution *via* classical computers due to a very long computation time. Alternatively, it is possible to obtain approximate solutions (not exact) using approximation algorithms.

In the present description, it will be said that the MIS problem of a graph is approximately solved when an independent set of the graph is found, but that there is no certainty that such independent set is a maximum independent set. The obtained independent set of the graph is therefore referred to as an approximate solution of the MIS problem of the graph.

The approximate solutions can be sufficient for some applications as long as they are reliable, in particular when the independent sets they provide have a size that is larger than the independent sets that can be found by hand and/or with greedy methods.

The quality of an approximate solution of the MIS problem and therefore, the performance of an approximation algorithm providing such approximate solution, is generally characterized by an approximation ratio defined as the ratio of the size of the independent set forming the approximate solution of the MIS problem to the size of the maximum independent set forming the solution of the MIS problem.

In this context, [REF1] discloses a method to approximately solve the MIS problem by using a quantum processor based on an array of neutral atoms exploiting the Rydberg blockade phenomenon. An input graph is transformed into a geometric graph, which is a spatial representation of such input graph wherein nodes are represented at different positions in space and the edges are represented by physical edges connecting such positions in space, wherein the edges can have various lengths and can intersect each other.

In [REF1], the obtained geometric graph is encoded in an array of Rydberg atoms trapped at predetermined positions using optical tweezers. Any edge between two nodes of the input graph is encoded in the array as a Rydberg interaction which is made possible when a distance between two atoms is inferior to a distance referred to as the Rydberg blockade radius. Interestingly, due to the Rydberg blockade phenomenon, interaction between neighboring Rydberg atoms in the array, *i.e.*, atoms separated by a distance inferior to the Rydberg blockade radius, prevents such neighboring atoms to be simultaneously excited. Therefore, the Hamiltonian describing the array of Rydberg atoms is intrinsically related to all the independent sets of the geometric graph and the measurement of the ground state of the array of Rydberg atoms can be used to obtain a maximum independent set of the input graph.

However, the method disclosed in [REF 1] only applies to approximately solving the MIS problem for a specific type of geometric graphs referred to as Unit-Disk graphs.

A Unit-Disk graph is a two-dimensional (2D) geometric graph wherein two nodes are directly connected by an edge only and necessarily if the distance between said nodes is smaller than a predetermined radius threshold (rb). As illustrated in FIG.1B, the graph 10 of Fig. 1A is a Unit-Disk graph as all edges are comprised within circles of radii equal to rb, for example circles 121, 122, 123. In the quantum processor disclosed in [REF 1], once the Unit-Disk graph is encoded in the array of Rydberg atoms, the predetermined radius threshold physically translates into a maximum distance between interacting Rydberg atoms.

In a non-Unit-Disk graph there are edges that cannot be encoded using Rydberg interactions. Therefore, the method of [REF 1] cannot apply to non-Unit-Disk graphs.

Further, solving approximately the MIS problem on Unit-Disk graphs, also referred to as UD-MIS problem, is actually also possible with classical computers. In particular, there are efficient approximation algorithms, known as polynomial-time approximation scheme (PTAS) that can provide approximate solutions with a high approximation ratio, even reaching an approximation ratio arbitrarily close to 1. Therefore, the interest in using a quantum computer for solving a UD-MIS problem is limited.

In order to address such limitations, [REF 2] discloses a method to transform an input graph into a Unit-Disk graph by using ancillary paths connecting remote nodes through ancillary nodes. Once the Unit-Disk graph is obtained, it is possible to encode such graph in an array of atoms using Rydberg interactions.

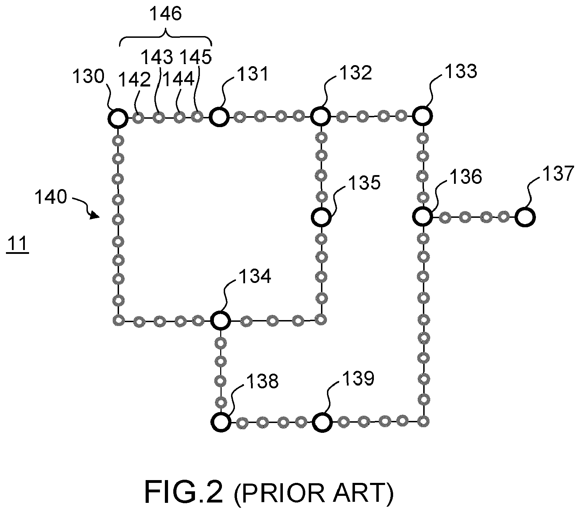

FIG. 2 shows a Unit-Disk graph 11 obtained after applying the method of [REF 2] to a non-unit-Disk graph comprising only main nodes (130 - 139). As an example, an ancillary path 146 comprising ancillary nodes (142 - 145) is introduced in order to connect main nodes 130, 131. Further, with such method, the main nodes 130, 134 are connected by an ancillary path 140 that can be encoded through Rydberg interaction while main nodes 135, 136 remain unconnected, which is not possible with a Unit-Disk Graph as the distance between main nodes 130, 134 is superior to the distance between main nodes 135, 136.

Practically, the ancillary nodes are encoded in the atom array by adding ancillary atoms at the position of the ancillary nodes. Further, [REF 2] discloses that by applying different detunings between atoms of the array, the size of a MIS of the input graph can be obtained from a Hamiltonian of the atom array.

However, such method is only valid for transforming a non-Unit Disk graph that is planar and has a degree inferior or equal to 3 to a Unit-Disk graph, wherein the degree of a graph is the degree of the node with the highest degree, the degree of a node is the number of edges connected to said node, and a planar graph is a graph that can be represented in a two-dimensional space in such a way that the edges do not intersect (except at a node connecting two edges). Further, there also exists PTAS to approximately solve the MIS problem for planar graphs with a degree inferior or equal to 3 and the interest of the method is therefore limited.

In this context, [REF 3] discloses a method to approximately solve the MIS problem on input graphs including graphs with a degree superior to 3 using a quantum processor based on an array of Rydberg atoms. In particular, [REF 3] discloses a transformation of the input graph in a target geometric graph that can be encoded using Rydberg interactions via the introduction of quantum wires, i.e. chains of ancillary atoms. In embodiments, the target geometric graph comprising the quantum wires may be a three-dimensional array of atoms.

However, in such method, some technical issues are encountered with tangled three-dimensional quantum wires. Further, in said method, the positions of the ancillary nodes are determined heuristically, i.e. by hand, which is impractical for graphs with a high number of edges.

There is thus a need for a systematic method to approximately solve the MIS problem on a large variety of input graphs, in particular non-unit disk graphs and/or non-planar graphs.

## SUMMARY

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

In the present description "3D" stands for "three-dimensional".

According to a first aspect, the present description relates to a method to find an approximate solution to a maximum independent set problem of an input graph comprising main nodes and main edges directly connecting such main nodes, the method comprising:

- rearranging said input graph onto a 3D orthogonal grid comprising grid edges and grid nodes; wherein each main node of the input graph is arranged on a grid node, thereby resulting in a rearranged graph;
- determining, in the rearranged graph, for each pair of main nodes that are directly connected by a main edge, an ancillary path between said main nodes, using a pathfinding algorithm, wherein said ancillary path is arranged along grid edges;
- generating an augmented graph by adding, along each ancillary path of the rearranged graph, an even number of ancillary nodes;
- providing a 3D array of neutral atoms comprising main atoms and ancillary atoms arranged to reflect said augmented 3D graph wherein,
- the main atoms have a same resonance frequency and the ancillary atoms have a same initial resonance frequency identical to the resonance frequency of the main atoms;
- the main atoms are arranged at positions that reflect the positions of the mains nodes; and
- the ancillary atoms are arranged at positions that reflect the positions of the ancillary nodes;
- applying a light shift pulse to the ancillary atoms in order to introduce at least one predetermined detuning of the resonance frequency of the ancillary atoms, so that each ancillary atom has a detuned resonance frequency that is different from the resonance frequency of the main atoms;
- applying a driving light pulse to all main atoms and all ancillary atoms during a predetermined driving time, wherein the driving light pulse has a Rabi frequency parameter and a frequency with a detuning with respect to the resonance frequency, and wherein the Rabi frequency parameter, the detuning and the predetermined driving time are configured to drive the 3D array of neutral atoms towards a predetermined final state; and
- detecting, in said predetermined final state, the main atoms that have been excited by the driving light pulse in order to obtain an independent set of the input graph.

In the present description, a driving light pulse is a pulse of light configured to make the quantum state of one or several atoms of the array evolve between two atomic levels forming an atomic transition.

Further, a Rabi frequency parameter of the driving light pulse is a parameter of the driving light pulse that produces, when the driving light pulse is driving an atomic transition between two atomic levels, a fluctuation of the populations of said two atomic levels at the so-called Rabi frequency. In practice, the Rabi frequency parameter of the driving light pulse may be selected by choosing at least a predetermined optical amplitude of the driving light pulse.

In the present description, a light shift pulse is a pulse of light sent to atoms in order to detune the resonance frequency of such atoms.

According to embodiments, the predetermined final state is a quantum state that is energetically close enough to the ground state such that said predetermined final state encodes an approximate solution of the MIS problem with a predetermined approximation ratio.

For example, the predetermined final state may encode an approximate solution of the MIS problem with an approximation ratio strictly superior to the approximation ratio of the approximate solutions provided by the approximation algorithms of the prior art.

By virtue of the method according to the present description and due to interactions between the individual atoms of the array of atoms, quantum states of the array of atoms, such as the predetermined final state, are related to the independent sets of the input graph.

According to embodiments, the predetermined final state is a ground state of the array of atoms. A "ground state" of a 3D array of atoms is a quantum state describing the array of atoms when the array of atoms is in a fundamental state, i.e., in a state of lowest energy. Such a ground state is different from a state wherein all the atoms of the array are in one of their ground states but conversely, due to the arrangement of the array of atoms, such a ground state encodes a maximum independent set of the input graph.

Further, by virtue of the method according to the present description, the rearrangement of the input graph onto a 3D orthogonal grid allows for using the three dimensions of space to add ancillary paths that do not cross each other.

Therefore, by contrast to methods of the prior art, the applicant has shown that the method according to the present description provides an efficient and systematic way to generate or "draw" augmented 3D graphs, irrespective of the number of main nodes in the input graph, at least for an input graph whose degree is inferior or equal to 6. In the present description, "systematic" means that no heuristic choices are involved.

Further, the combination of the addition of an even number of ancillary nodes in each ancillary path of the augmented 3D graph with the emission of a light shift pulse specifically directed to the ancillary nodes to detune the resonance frequency of the ancillary atoms from the resonance frequency of the main atoms, ensures that an independent set of the input graph can be derived from the predetermined final state of the 3D array of neutral atoms that results from the application of the driving light pulse.

With such method, it is therefore possible to find an approximate solution to the MIS problem for any input graph with a degree inferior or equal to 6. In particular, it is possible to approximately solve the MIS problem for an input graph that is not a unit-disk graph and/or that is not planar.

Interestingly, in the state of the art, there is no efficient algorithms to approximately solve the MIS problem for any graph with a degree inferior or equal to 6. In particular, it is known, see [REF 4], that approximation algorithms with a polynomial time cannot provide an approximate solution of the MIS problem of a graph with an approximation ratio strictly superior to $r\_min = 5 / (d + 3)$, where d is the degree of the graph.

The method according to the present description is, therefore, particularly advantageous because it can provide an approximate solution of the MIS problem with an approximation ratio strictly superior to $r\_min$, as long as a predetermined final state encoding such approximate solution can be reached, which the applicant has observed to be technically achievable.

According to one or further embodiments, said ancillary paths are determined using said pathfinding algorithm, such that each ancillary path between two main nodes corresponds to a shortest path, along the grid edges, between said main nodes.

Advantageously, when each ancillary path is a shortest path between two main nodes, the number of ancillary nodes in each ancillary path is reduced. Therefore, the number of ancillary atoms arranged in the 3D array of neutral atoms to reflect the augmented 3D graph is also reduced, which facilitates the control of the array of atoms and reduces the experimental issues.

According to one or further embodiments, said pathfinding algorithm is a Dijkstra algorithm. The Dijkstra algorithm is known from the skilled man and is described, for example, in [REF 5].

By virtue of the Dijkstra algorithm, it is ensured both that the ancillary paths are the shortest paths between main nodes and that the ancillary paths do not cross each other.

According to one or further embodiments, said pathfinding algorithm is an A* algorithm. The A* algorithm is known from the skilled man and is described, for example, in [REF 6].

By virtue of the A* algorithm, it is ensured both that the ancillary paths are the shortest paths between main nodes and that the ancillary paths do not cross each other.

According to one or further embodiments, the Rabi frequency parameter, the detuning and the predetermined driving time of the driving light pulse are configured to drive the 3D array of neutral atoms towards at least one excited state before driving the 3D array of neutral atoms towards said predetermined final state.

The applicant has shown that such Rabi frequency parameter, such detuning and such predetermined driving time of the driving light pulse can be obtained with a Quantum Approximate Optimization Algorithm.

According to one or further embodiments, said spatial rearranging of the input graph onto a 3D orthogonal grid comprises applying a Fruchterman-Reingold force directed algorithm to the input graph. A Fruchterman-Reingold force directed algorithm is known from the skilled man and is described, for example, in [REF 6].

According to one or further embodiments, the ancillary nodes are substantially evenly spaced along each of the ancillary paths. The applicant has observed that such spacing ensures that the constraints of the input graph are conserved in the augmented 3D graph.

According to one or further embodiments, generating an augmented 3D graph comprises, for each ancillary path arranged along an odd number of grid edges, placing one ancillary node on each grid node of the ancillary path.

By such addition, it is possible to obtain an even number of evenly spaced ancillary nodes in an ancillary path that is arranged along an odd number of grid edges. This ensures that the ensemble consisting of all the MIS of the input graph is comprised within the ensemble consisting of all the MIS of the augmented graph in the case that the augmented graph comprises at least one ancillary path comprising an odd number of grid edges.

According to one or further embodiments, generating an augmented 3D graph comprises, for each ancillary path arranged along an even number of grid edges, dividing the ancillary path into an odd number of segments of equal length and placing one ancillary node between each of said segments, i.e., between each pair of consecutive segments.

By such addition, it is possible to obtain an even number of evenly spaced ancillary nodes in an ancillary path that is arranged along an even number of grid edges. This ensures that the ensemble consisting of all the MIS of the input graph is comprised within the ensemble consisting of all the MIS of the augmented graph in the case that the augmented graph comprises at least one ancillary path comprising an even number of grid edges.

According to one or further embodiments, the neutral atoms are arranged in the 3D array so that:

any distance between ancillary atoms reflecting directly connected ancillary nodes is inferior or equal to a Rydberg blockade radius of said neutral atoms; and
any distance between an ancillary atom and a main atom reflecting an ancillary node and a main node that are directly connected is inferior or equal to the Rydberg blockade radius of said neutral atoms.

Such distances ensures that the edges that directly connect ancillary nodes and/or main nodes can be encoded as Rydberg interactions between neutral atoms of the 3D array.

Such a distance is, for example, comprised between 1 micrometer and about 20 micrometers and depends on the energy levels of the neutral atoms that are used for the Rydberg interaction.

According to one or further embodiments, the at least one predetermined detuning of the resonance frequency of the ancillary atoms is comprised between about **0.5 J** and about **0.95 J**, wherein J is the interaction force, in Hertz, between two closest atoms of the 3D array of neutral atoms.

In the present description, $J = \dfrac{c_6}{r^{\cdot 6}}$ wherein $r$ is the distance between the two closest atoms of the 3D array of neutral atoms and $C_6$ is a constant depending on the energy levels of such closest atoms.

The applicant has shown that such detuning is advantageous to ensure that an independent set returned by the method is a solution of the MIS problem of the input graph.

According to one or further embodiments, the at least one predetermined detuning of the resonance frequency of the ancillary atoms is equal to about J/2, wherein J is the interaction force, in Hertz, between two closest atoms of the 3D array of neutral atoms.

According to one or further embodiments, a plurality of predetermined detunings of the resonance frequency are introduced so that at least two ancillary atoms have two different detuned frequencies.

According to one or further embodiments, the plurality of predetermined detunings of the resonance frequency of the ancillary atoms are comprised between about **0.5 J** and about **0.95 J.**

According to a second aspect, the present description relates to a quantum processing system to find an approximate solution to a maximum independent set problem of an input graph comprising main nodes and main edges directly connecting said main nodes, the system comprising:

- a processing unit configured for:
  rearranging said input graph onto a 3D orthogonal grid comprising grid edges and grid nodes wherein each main node is arranged on a grid node, thereby resulting in a rearranged graph;
- determining, in the rearranged graph, for each pair of main nodes that are directly connected by a main edge, an ancillary path between said main nodes, using a pathfinding algorithm, wherein each ancillary path is arranged along grid edges;

- generating an augmented 3D graph by adding, along each ancillary path of the rearranged graph, an even number of ancillary nodes;
- optical trapping means for producing a 3D array of neutral atoms comprising main atoms and ancillary atoms arranged to reflect the 3D augmented graph, wherein

the main atoms have a same resonance frequency and the ancillary atoms have a same initial resonant frequency identical to the resonance frequency of the main atoms;

the main atoms are arranged at positions that reflect the positions of the main nodes; and

the ancillary atoms are arranged at positions that reflect the positions of the ancillary nodes;

- laser emitting means configured for:

applying a light shift pulse to the ancillary atoms in order to introduce at least one predetermined detuning of the resonance frequency of the ancillary atoms, so that each ancillary atom has a detuned resonance frequency that is different from the resonance frequency of the main atoms; and

applying a driving light pulse to all main atoms and all ancillary atoms during a predetermined driving time, wherein the driving light pulse has a Rabi frequency parameter and a frequency with a detuning with respect to the resonance frequency, and wherein the Rabi frequency parameter, the detuning and the predetermined driving time are configured to drive the 3D array of neutral atoms towards a predetermined final state; and

- a detection unit configured to detect, in said predetermined final state, the main atoms (of the 3D array of neutral atoms) that have been excited by the driving light pulse in order to obtain an independent set of the input graph.

According to one or further embodiments, the neutral atoms are Rubidium atoms.

According to one or further embodiments, the quantum processing system further comprises a spatial light modulator cooperating with the laser emitting means so that only the ancillary atoms are subject to the light shift pulse.

BRIEF DESCRIPTION OF DRAWINGS

Other advantages and features of the invention will become apparent on reading the description, illustrated by the following figures:

- FIG. 1A, already described, is a schematic diagram illustrating an example of input graph;
- FIG. 1B, already described, is a schematic diagram illustrating the fact that the input graph represented in FIG. 1A is a unit-disk graph;
- FIG. 2, already described, is a schematic diagram illustrating a non-unit-disk input graph transformed into a unit-disk graph by adding ancillary nodes according to the prior art;
- FIG. 3, is a flowchart for describing an example of a method to find an approximate solution to a maximum independent set problem of an input graph according to the present description;
- FIG. 4A, is a schematic diagram illustrating an example of an input graph according to the present description;
- FIG. 4B, is a schematic diagram illustrating an example of a graph obtained after rearranging an input graph onto a 3D orthogonal grid according to a method of the present description;
- FIG. 4C, is a schematic diagram illustrating an example of an augmented 3D graph obtained according to a method of the present description.

DETAILED DESCRIPTION

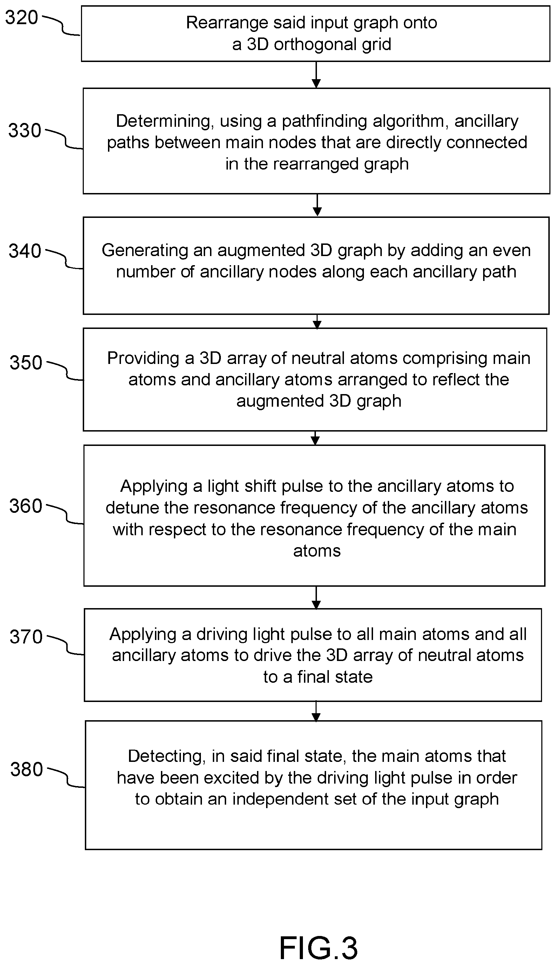

FIG. 3 represents a flowchart for describing an example of a method to find an approximate solution to a maximum independent set problem of an input graph according to the present description.

The input graph comprises edges and nodes, wherein each edge directly connects a pair of nodes. The input graph generally represents structured data.

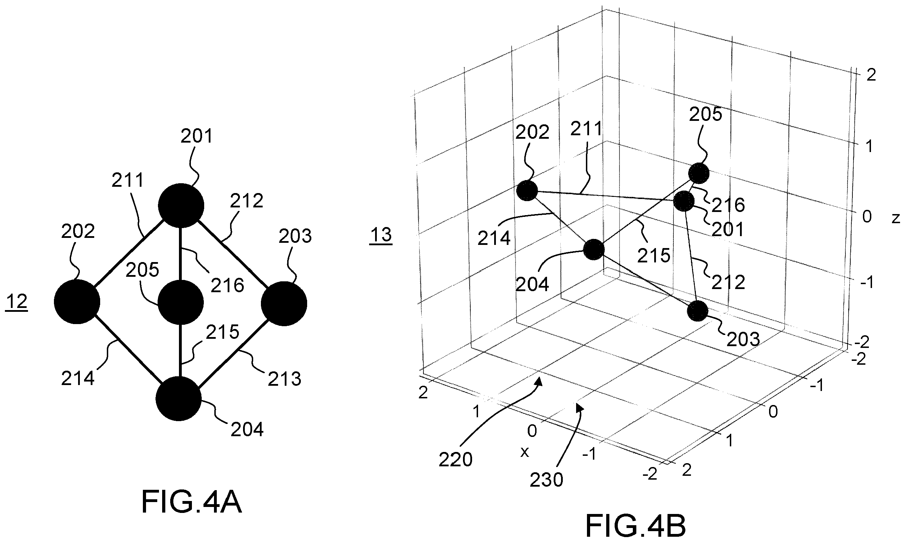

Fig. 4A shows an example of such an input graph 12 for illustration purposes. The input graph of Fig. 4A comprises main nodes (201, 202, 203, 204, 205) and main edges (211, 212, 213, 214, 215, 216).

The input graph 12 is a non-unit disk graph, *i.e.,* it cannot be represented as a unit-disk graph. Indeed, if the input graph 12 was a unit-disk graph, as nodes 204, 203 are connected, necessarily the nodes 205, 203 should also be connected because the distance between nodes 205, 203, is inferior to distance between nodes 204, 203.

According to embodiments, the input graph can also be a non-planar graph such as the complete bipartite graph, generally denoted as K3,3 in the field of graph theory. An independent set, and in particular a maximum independent set, of such a complete bipartite graph cannot be encoded in an array of atoms using the Rydberg blockade phenomenon with the methods of the prior art.

In the method according to the present description, the input graph can generally be any graph with a degree inferior or equal to 6, including non-planar graphs and non-Unit disk graphs.

It is not necessary to provide a geometric representation of the input graph with the exact positions of the nodes and edges. The input graph may be defined merely by the nodes and the connections between said nodes.

In step 320, the method comprises rearranging the input graph onto a 3D orthogonal grid comprising grid edges and grid nodes in order to generate a rearranged graph.

For example, an algorithm is applied to the input graph in order to rearrange the main nodes of the graph so that they are located on grid nodes of the 3D orthogonal grid. The main edges of the input graph are also spatially rearranged so that they directly connect the rearranged main nodes of the input graph.

A corollary of Steinitz's theorem ensures that is it is possible to rearrange any graph with a degree inferior of equal to 6 onto a 3D orthogonal grid. Therefore, step 320 of the method according to the present description can be applied to any graph. In particular, in the orthogonal 3D grid, the grid nodes are distinct points of $\mathbf{Z^3}$ (where $\mathbf{Z}$ is the ensemble of relative numbers) and the grid edges are the edges connecting such points.

As an example, FIG. 4B represents a rearranged graph 13 obtained after applying a Fruchterman-Reingold algorithm on the input graph 12 in order to spatially rearrange the input graph 12 onto a 3D orthogonal grid. The 3D orthogonal grid comprises grid nodes, such as grid node 220, and grid edges, such as grid edge 230.

In the rearranged graph 13, the main nodes (201 - 205) are arranged at positions of grid nodes and the main edges (211 - 216) are represented as line-segments connecting such grid nodes.

By rearranging the input graph 12 onto the 3D orthogonal grid, the configuration of the main nodes is unfolded into a 3D dimensional space so that it is easier to find ancillary paths that connect remote main nodes without crossing each other, compared to using only two dimensions of space.

For step 320, various algorithms can be used, such as the Fruchterman-Reingold force-directed algorithm, also referred to FR algorithm in the present description. In the FR algorithm, the input graph is considered as a physical system where the nodes are repulsive while edges between nodes act as springs. A mechanical equilibrium state of the system therefore results in an aesthetic layout, wherein all the edges are of approximately equal length and wherein the number of crossing edges is minimized. The main nodes are then each moved to a closest grid node provided that there is not two nodes with the same coordinates.

In step 330, the method comprises determining in the rearranged graph, via a pathfinding algorithm, ancillary paths between connected main nodes. The ancillary paths are arranged along grid edges that connect main nodes.

Each ancillary path is generally a shortest path, along the grid edges, between main nodes of the 3D geometric graph that are directly connected. The ancillary paths are configured so that they do not cross each other. It is possible to determine the ancillary paths sequentially, one after the other.

Several pathfinding algorithms can be used, such as the Dijkstra algorithm and the A* algorithm. Such algorithms are algorithms generally used in the field of computer science to find the shortest path in a maze where walls and holes prevent the user from going in a straight line from point A to point B.

In step 340, the method comprises adding, in each ancillary path, an even number of ancillary nodes in order to draw an augmented 3D graph. In particular, each ancillary path is transformed into a chain of ancillary nodes connecting the two main nodes of the ancillary path.

Several cases may arise depending on the length of the ancillary path on the 3D grid.

In embodiments, if the ancillary path length is odd, i.e., if the ancillary path is arranged along an odd number of grid edges, then one ancillary node may be added on each grid node of the ancillary path. Therefore, the ancillary nodes are evenly spaced along the ancillary path and the ancillary path directly comprises an even number of ancillary nodes.

In embodiments, if the ancillary path length is even, i.e., if the ancillary path is arranged along an even number of grid edges, for example a number equal to integer $p$, then $p+1$ ancillary nodes are added in the ancillary path. The positions of such ancillary nodes are calculated so that the ancillary nodes are regularly spaced along the ancillary path.

For example, each ancillary path may be divided into an odd number of segments of equal length and one ancillary node may be placed between each of said segments, i.e. between each pair of adjacent segments. Therefore, the ancillary nodes are evenly spaced along the ancillary path and the ancillary path comprises an even number of ancillary nodes.

An even number of ancillary nodes in each ancillary path ensures that an independent set of the augmented 3D graph obtained from the steps 350, 360, 370, 380 (which will be later described) can be used to infer a corresponding independent set of the input graph.

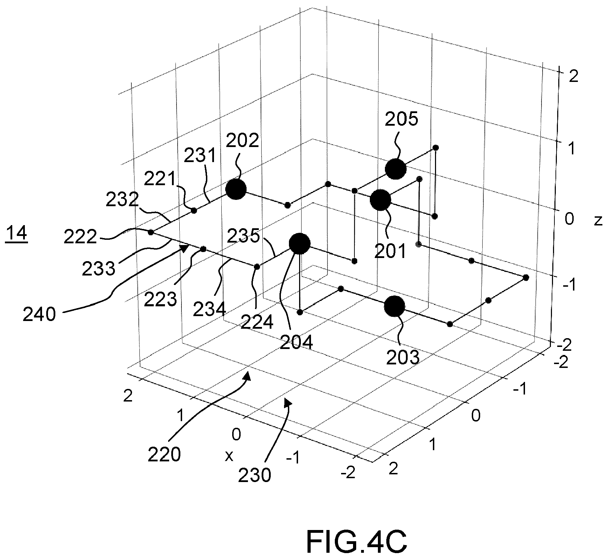

As an example, FIG. 4C represents an augmented graph 14 drawn from the rearranged graph 13 using the method according to the present description. The augmented graph 14 comprises ancillary paths that are connecting main nodes through a plurality of ancillary nodes. For example, the ancillary path 240 connects the main nodes 202, 204.

The ancillary paths of the augmented graph 14 therefore replace the main edges of the rearranged graph 13. For example, the ancillary path 240 of the augmented graph 14 replaces the main edge 214 of the rearranged graph 13.

The ancillary paths are arranged along the grid edges. For example, in the example illustrated in FIG. 4C, the ancillary path 240 is arranged along the grid edges 231, 232, 233, 234, 235.

Further, in the example illustrated in FIG. 4C, the ancillary paths comprise an even number of ancillary nodes. For example, the ancillary path 240 comprises four ancillary nodes 221, 222, 223, 224 connecting main nodes 202, 204.

In the example represented in FIG. 4C, the ancillary nodes are arranged at positions of grid nodes, however this is not a restriction of the method. According to other examples, the ancillary nodes can be at positions that are not positions of grid nodes. Such a case may arise for example, as explained above, when an ancillary path is arranged along an even number of grid edges.

The applicant found that the A* algorithm can be advantageously adapted to the determination of the ancillary paths of the rearranged graph in order to draw an augmented 3D graph wherein it is possible to connect remote main nodes through a plurality of ancillary nodes. As the pathfinding algorithm A* is configured to avoid crossing between different ancillary paths, it makes it possible to encode the connections between remote main nodes as Rydberg interactions between Rydberg atoms via the Rydberg blockade phenomenon.

In step 350, the method comprises providing a 3D array of neutral atoms arranged according to the augmented graph, *i.e.,* in order to reflect the augmented 3D graph. Such step can be considered as an encoding of the augmented graph in an array of neutral atoms. The atoms generally are two-level systems and have a resonance frequency.

The 3D array of neutral atoms comprises main atoms and ancillary atoms spatially arranged to reflect the positions of the main nodes and the ancillary nodes in the augmented graph.

In particular, the 3D array of neutral atoms comprises main atoms arranged at positions corresponding to the main nodes of the augmented graph, and comprises ancillary atoms arranged at positions corresponding tos the ancillary nodes of the augmented graph.

The atoms of the 3D array of neutral atoms are arranged at their respective positions using optical trapping techniques and optical tweezers known from the art, see, for example [REF 1]. The neutral atoms can be, for example, Rubidium atoms. The neutral atoms can be, for example, trapped in a vacuum chamber.

For example, the main atoms and the ancillary atoms may be the same type of neutral atoms.

The distance between interacting atoms, *i.e.,* atoms that represent directly connected nodes in the augmented graph, is chosen so that it is inferior to the Rydberg blockade radius of such atoms. The Rydberg blockade radius can be estimated based on the experimental parameters used in the array of neutral atoms and on the energy levels of the atoms that are used.

Advantageously, the dimensions of the 3D orthogonal grid used in step 320 are therefore calculated so that the atoms reflecting directly connected nodes in the ancillary paths can interact through the Rydberg blockade phenomenon.

In step 360, the method comprises applying a light shift pulse to introduce detunings in resonance frequencies of the ancillary atoms. Indeed, once the input graph has been converted in an augmented 3D graph and encoded in an array of neutral atoms, naively detecting the excited atoms in a ground state of the array of atoms would not yield the MIS of the input graph because of the presence of ancillary atoms. Similarly, naively detecting the excited atoms in a predetermined final state would not yield an independent set of the input graph.

Therefore, detunings are introduced in the resonance frequencies of the ancillary atoms so that they are not excited by a driving light pulse of the same frequency as the main atoms.

The applicant has demonstrated that having a value of detuning, $\delta_i$, comprised between about **0.5 $J$** and

$$J = \frac{C_6}{r^6}$$

about **0.95 $J$** (where $J = \frac{C_6}{r^6}$ is the interaction force, in Hertz, between two closest atoms in the array reflecting the augmented graph and $C_6$ is a constant depending on the energy levels of such closest atoms) is advantageous, as it ensures that the independent set returned by the method approximately solve the MIS problem of the input graph. This means that two atoms representing nodes that are directly connected in the augmented graph will interact through Rydberg interaction and feel an effective Rydberg blockade from each other.

Further, with such detunings, it is ensured that the ensemble of the MIS of the augmented graph comprises the ensemble of the MIS of the input graph.

According to embodiments, the detuning is chosen equal to about J/2 for all the ancillary atoms.

For example, the frequency of the light shift pulse is selected so that the difference between the frequency of the light shift pulse and the resonance frequency (i.e. the resonance frequency of the ancillary atoms) is equal to the desired detuning.

In step 370, the method comprises applying a driving light pulse to all main atoms and all ancillary atoms so that the array of atoms evolves towards a predetermined final state, for example a ground-state of the array of atoms. Because of the interactions between atoms of the array reflecting the augmented 3D graph and because of the specific construction of the augmented graph 3D from the input graph, applying the driving light pulse gives rise to a predetermined final state of the array of atoms that reflects independent sets of the input graph.

The driving light pulse comprises at least three parameters, a total duration (i.e. a predetermined time during which the driving light pulse is applied to all the main atoms and all the ancillary atoms), a Rabi frequency parameter and a frequency having a detuning with respect to the resonance frequency of the main atoms.

The driving light pulse is configured to drive the 3D array of neutral atoms towards a predetermined final state, *i.e.,* the parameters of the driving light pulse are configured to drive the 3D array of neutral atoms towards said predetermined final state.

In embodiments, the Rabi frequency parameter and the detuning are functions of time, for example step-wise functions.

For example, the Rabi frequency parameter is chosen by selecting an amplitude of the driving light pulse.

In embodiments, the driving light pulse may be generated by laser emitting means comprising, for example, two lasers with two different frequencies and two equal or different amplitudes. The Rabi frequency parameter can therefore be selected by adjusting, for example, the amplitude of the two lasers and/or the difference between the frequencies of the two lasers laser.

In order to find the most adequate driving light pulse, for example, the driving light pulse that drives the array of atoms towards a ground state, the parameters can be optimized using several techniques, such as a Quantum Approximate Optimization Algorithm (QAOA) or a Quantum Adiabatic Algorithm (QAA). The structure of the array of atoms arranged according to the augmented 3D graph ensures that any adiabatic algorithm will provide a pulse that yield a maximum independent set of the input graph.

In certain cases, it may be preferred to choose a predetermined final state that is not a ground state (for example in order to avoid driving the array of atoms exactly adiabatically). The method according to the present description advantageously ensures that even a predetermined final state that is not a ground state will yield an independent set of the input graph.

Further, it is even possible to choose the quality of such independent set, in terms of approximation ratio, by choosing a final state that is energetically close enough to the ground state. The applicant has observed that it is rather experimentally straightforward to effectively obtain a predetermined final state of the array of atoms that is energetically close to the ground state suitable to provide an approximate solution of the MIS problem with an approximation ratio strictly superior to the approximation ratio of the naive algorithms of the prior art, i.e. strictly superior to $r\_min = 5 / (d + 3)$, wherein d is the degree of the input graph.

In embodiments, the pulse parameters are optimized in a hybrid loop procedure, with Bayesian supervised learning run on a classical computer. Advantageously, Bayesian optimization performs well with fewer iterations than other classical algorithms and can maintain a good level of performance with a noisier estimation when the number of iterations is limited. Such procedure also provides a compensation of undesired noises due to experimental imperfections of the quantum processor on which the method to find a maximum independent set of an input graph is implemented.

In step 380, the method comprises detecting the main atoms that have been excited by the driving light pulse in the predetermined final state of the array of atoms. Once the excited main atoms have been detected, an independent set of the input graph can be obtained.

In embodiments, the parameters are optimized iteratively by applying a pulse (as described in step 370) with initial parameters to the atoms and measuring the excited main atoms (as described in step 380). Therefore, the measured solution of the MIS-problem obtained from the measurement can be compared to what would be expected from computation by other means and the procedure is repeated with adjusted parameters until the optimal parameters of the driving light pulse are found.

While the invention has been described with respect to a limited number of embodiments, those skilled in the art, having benefit of this disclosure, will appreciate that other embodiments can be devised which do not depart from the spirit of the invention as disclosed herein. Accordingly, the scope of the invention should be limited only by the attached claims.

REFERENCES

[REF 1] HENRIET, Loïc. Robustness to spontaneous emission of a variational quantum algorithm. Physical Review A, 2020, vol. 101, no. 1, p. 012335.

[REF 2] PICHLER, Hannes, WANG, Sheng-Tao, ZHOU, Leo, et al. Quantum optimization for maximum independent set using Rydberg atom arrays. arXiv preprint arXiv:1808.10816, 2018.

[REF 3] KIM, Minhyuk, KIM, Kangheun, HWANG, Jaeyong, et al. Rydberg Quantum Wires for Maximum Independent Set Problems with Nonplanar and High-Degree Graphs. arXiv preprint arXiv:2109.03517, 2021.

[REF 4] BERMAN, Piotr, FURER, Martin. Approximating Maximum Independent Set. In : Proceedings of the fifth annual ACM-SIAM Symposium on discrete algorithms. SIAM, 1994. no. 70, p. 365.

[REF 5] DIJKSTRA, Edsger W., et al. A note on two problems in connexion with graphs. Numerische mathematik, 1959, vol. 1, no. 1, p. 269-271.

[REF 6] HART, Peter E., NILSSON, Nils J., et RAPHAEL, Bertram. A formal basis for the heuristic determination of minimum cost paths. IEEE transactions on Systems Science and Cybernetics, 1968, vol. 4, no. 2, p. 100-107.

[REF 6] FRUCHTERMAN, Thomas MJ et REINGOLD, Edward M. Graph drawing by force-directed placement. Software: Practice and experience, 1991, vol. 21, no. 11, p. 1129-1164.

**Claims**

1. A method to find an approximate solution to a maximum independent set problem of an input graph (12) comprising main nodes (201 - 205) and main edges (211- 216) directly connecting said main nodes, the method comprising:

- rearranging said input graph onto a 3D orthogonal grid comprising grid edges (230) and grid nodes (220), wherein each main node of the input graph is arranged on a grid node, thereby resulting in a rearranged graph (13);

- determining, in the rearranged graph, for each pair of main nodes (202, 204) that are directly connected by a main edge (214), an ancillary path between said main nodes, using a pathfinding algorithm, wherein said ancillary path is arranged along grid edges;

- generating an augmented 3D graph (14) by adding, along each ancillary path of the rearranged graph (13), an even number of ancillary nodes (221 - 224);

- providing a 3D array of neutral atoms comprising main atoms and ancillary atoms arranged to reflect said augmented 3D graph (14) wherein,

- the main atoms have a same resonance frequency and the ancillary atoms have a same initial resonance frequency identical to the resonance frequency of the main atoms;

- the main atoms are arranged at positions that reflect the positions of the mains nodes; and

- the ancillary atoms are arranged at positions that reflect the positions of the ancillary nodes;

- applying a light shift pulse to the ancillary atoms in order to introduce at least one predetermined detuning of the resonance frequency of the ancillary atoms, so that each ancillary atom has a detuned resonance frequency that is different from the resonance frequency of the main atoms;

- applying a driving light pulse to all main atoms and all ancillary atoms during a predetermined driving time, wherein the driving light pulse has a Rabi frequency parameter and a frequency with a detuning with respect to the resonance frequency, and wherein the Rabi frequency parameter, the detuning and the predetermined driving time are configured to drive the 3D array of neutral atoms towards a predetermined final state; and

- detecting, in said predetermined final state, the main atoms that have been excited by the driving light pulse in order to obtain an independent set of the input graph.

2. The method according to claim 1, wherein:
such predetermined final state is energetically close enough to the ground state such that said predetermined final state encodes an approximate solution of the MIS problem with a predetermined approximation ratio.

3. The method according to any one of claims 1 to 2, wherein:
said ancillary paths are determined using said pathfinding algorithm, such that each ancillary path between two main nodes corresponds to a shortest path, along the grid edges, between said main nodes.

4. The method according to any one of the preceding claims, wherein said pathfinding algorithm is a Dijkstra algorithm.

5. The method according to any one of the preceding claims, wherein said pathfinding algorithm is an A* algorithm.

6. The method according to any one of the preceding claims, wherein the Rabi frequency parameter, the detuning and the predetermined driving time of the driving light pulse are configured to drive the 3D array of neutral atoms towards at least one excited state before driving the 3D array of neutral atoms towards said predetermined final state.

7. The method according to any one of the preceding claims, wherein said spatial rearranging of the input graph onto a 3D orthogonal grid comprises applying a Fruchterman-Reingold force directed algorithm to the input graph.

8. The method according to any one of the preceding claims, wherein the ancillary nodes are substantially evenly spaced along each of the ancillary paths.

9. The method according to any one of the preceding claims, wherein generating an augmented 3D graph (14) comprises, for each ancillary path arranged along an odd number of grid edges, placing one ancillary node on each grid node of the ancillary path.

10. The method according to any one of the preceding claims, wherein generating an augmented 3D graph (14) comprises, for each ancillary path arranged along an even number of grid edges, dividing the ancillary path into an odd number of segments of equal length and placing one ancillary node between each of said segments.

11. The method according to any one of the preceding claims, wherein the neutral atoms are arranged in the 3D array so that:

any distance between ancillary atoms reflecting directly connected ancillary nodes is inferior or equal to a Rydberg blockade radius of said neutral atoms; and
any distance between an ancillary atom and a main atom reflecting an ancillary node and a main node that are directly connected is inferior or equal to the Rydberg blockade radius of said neutral atoms.

**12.** The method according to any one of the preceding claims, wherein the at least one predetermined detuning of the resonance frequency of the ancillary atoms is comprised between about 0.5 J and about 0.95 J, wherein J is the interaction force, in Hertz, between two closest atoms of the 3D array of neutral atoms.

**13.** The method according to any one of the preceding claims, wherein the at least one predetermined detuning of the resonance frequency of the ancillary atoms is equal to about J/2, wherein J is the interaction force, in Hertz, between two closest atoms of the 3D array of neutral atoms.

**14.** The method according to any one of the preceding claims, wherein a plurality of predetermined detunings of the resonance frequency are introduced so that at least two ancillary atoms have two different detuned resonance frequencies.

**15.** A quantum processing system to find an approximate solution to a maximum independent set problem of an input graph (12) comprising main nodes (201 - 205) and main edges (211 - 216) directly connecting said main nodes, such system comprising:

- a processing unit configured for:
rearranging said input graph (12) onto a 3D orthogonal grid comprising grid edges (230) and grid nodes (220) wherein each main node is arranged on a grid node, thereby resulting in a rearranged graph (13);
- determining, in the rearranged graph (13), for each pair of main nodes (202, 204) that are directly connected by a main edge (214), an ancillary path between said main nodes, using a pathfinding algorithm, wherein each ancillary path is arranged along grid edges;
- generating an augmented 3D graph (14) by adding, along each ancillary path of the rearranged graph (13), an even number of ancillary nodes (221 - 224);
- optical trapping means for producing a 3D array of neutral atoms comprising main atoms and ancillary atoms arranged to reflect the 3D augmented graph (13) wherein,

the main atoms have a same resonant frequency and the ancillary atoms have a same initial resonant frequency identical to the resonance frequency of the main atoms; the main atoms are arranged at positions that reflect the positions of the main nodes; and the ancillary atoms are arranged at positions that reflect the positions of the ancillary nodes;

- laser emitting means configured for:

applying a light shift pulse to the ancillary atoms in order to introduce at least one predetermined detuning of the resonance frequency of the ancillary atoms, so that each ancillary atom has a detuned resonance frequency that is different from the resonance frequency of the main atoms; and
applying a driving light pulse to all main atoms and all ancillary atoms during a predetermined driving time, wherein the driving light pulse has a Rabi frequency parameter and a frequency with a detuning with respect to the resonance frequency, and wherein the Rabi frequency parameter, the detuning, and the predetermined driving time are configured to drive the 3D array of neutral atoms towards a predetermined final state; and

- a detection unit configured to detect, in said predetermined final state, the main atoms that have been excited by the driving light pulse in order to obtain a maximum independent set of the input graph.

**16.** The quantum processing system as claimed in claim 15, further comprising a spatial light modulator cooperating with the laser emitting means so that only the ancillary atoms are subject to the light shift pulse.

FIG.1A (PRIOR ART)

FIG.1B (PRIOR ART)

FIG.2 (PRIOR ART)

320 — Rearrange said input graph onto
a 3D orthogonal grid

330 — Determining, using a pathfinding algorithm, ancillary
paths between main nodes that are directly connected
in the rearranged graph

340 — Generating an augmented 3D graph by adding an even
number of ancillary nodes along each ancillary path

350 — Providing a 3D array of neutral atoms comprising main
atoms and ancillary atoms arranged to reflect the
augmented 3D graph

360 — Applying a light shift pulse to the ancillary atoms to
detune the resonance frequency of the ancillary atoms
with respect to the resonance frequency of the main
atoms

370 — Applying a driving light pulse to all main atoms and all
ancillary atoms to drive the 3D array of neutral atoms
to a final state

380 — Detecting, in said final state, the main atoms that
have been excited by the driving light pulse in order
to obtain an independent set of the input graph

FIG.3

FIG.4B

FIG.4A

FIG.4C

Europäisches
Patentamt

European
Patent Office

Office européen
des brevets

## EUROPEAN SEARCH REPORT

Application Number

EP 22 30 5926

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MINHYUK KIM ET AL: "Rydberg Quantum Wires for Maximum Independent Set Problems with Nonplanar and High-Degree Graphs", ARXIV.ORG, CORNELL UNIVERSITY LIBRARY, 201 OLIN LIBRARY CORNELL UNIVERSITY ITHACA, NY 14853, 8 September 2021 (2021-09-08), XP091051715, * abstract; figure 3 * * page 2, column 1, line 1 - line 5 * * page 2, column 1, line 18 - line 19 * * page 1, column 1, line 16 - line 21 * * page 2, column 2, line 16 - line 22 * * page 2, column 1, line 23 - line 27 * * page 6, column 1, line 1 - page 6, column 2, line 3 * * page 3, column 1, line 15 - page 3, column 2, line 13 * * Appendix A * * Appendix B * ----- | 1-16 | INV. G06N10/40 G06N10/60 |
| A,D | HANNES PICHLER ET AL: "Quantum Optimization for Maximum Independent Set Using Rydberg Atom Arrays", ARXIV.ORG, CORNELL UNIVERSITY LIBRARY, 201 OLIN LIBRARY CORNELL UNIVERSITY ITHACA, NY 14853, 31 August 2018 (2018-08-31), XP081185651, * the whole document * ----- | 1-16 | **TECHNICAL FIELDS SEARCHED (IPC)** G06N |

The present search report has been drawn up for all claims

| Place of search | Date of completion of the search | Examiner |
|---|---|---|
| The Hague | 12 December 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HENRIET, LOÏC.** Robustness to spontaneous emission of a variational quantum algorithm. *Physical Review A,* 2020, vol. 101 (1), 012335
- **PICHLER, HANNES ; WANG, SHENG-TAO ; ZHOU, LEO et al.** Quantum optimization for maximum independent set using Rydberg atom arrays. *arXiv:1808.10816,* 2018
- **KIM, MINHYUK ; KIM, KANGHEUN ; HWANG, JAEYONG et al.** Rydberg Quantum Wires for Maximum Independent Set Problems with Nonplanar and High-Degree Graphs. *arXiv:2109.03517,* 2021
- **BERMAN, PIOTR ; FURER, MARTIN.** Approximating Maximum Independent Set. In : Proceedings of the fifth annual ACM-SIAM Symposium on discrete algorithms. *SIAM,* 1994, (70), 365
- **DIJKSTRA, EDSGER W. et al.** A note on two problems in connexion with graphs. *Numerische mathematik,* 1959, vol. 1 (1), 269-271
- **HART, PETER E. ; NILSSON, NILS J. ; RAPHAEL, BERTRAM.** A formal basis for the heuristic determination of minimum cost paths. *IEEE transactions on Systems Science and Cybernetics,* 1968, vol. 4 (2), 100-107
- **FRUCHTERMAN, THOMAS MJ ; REINGOLD, EDWARD M.** Graph drawing by force-directed placement. *Software: Practice and experience,* 1991, vol. 21 (11), 1129-1164